**Europäisches Patentamt**

**European Patent Office**

**Office européen des brevets**

(11) Veröffentlichungsnummer: **0 240 068**
**A2**

## (12) EUROPÄISCHE PATENTANMELDUNG

(21) Anmeldenummer: **87200530.1**

(22) Anmeldetag: **23.03.87**

(51) Int. Cl.⁴: **H02K 7/075 , H02K 7/06**

(30) Priorität: **29.03.86 DE 3610772**

(43) Veröffentlichungstag der Anmeldung:
**07.10.87 Patentblatt 87/41**

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**
**DE**
Anmelder: **N.V. Philips' Gloeilampenfabrieken**
**Groenewoudseweg 1**
**NL-5621 BA Eindhoven(NL)**
**FR GB**

(72) Erfinder: **Schemmann, Hugo, Dr.**
**Zwartebergweg 6**
**NL-6371 XD Schaesberg(NL)**
Erfinder: **Steiner, Peter Erwin**
**Feldm.-Conrad-Platz 9**
**A-9020 Klagenfurt(AT)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Kleines Haushaltsgerät, das mittels eines Einphasensynchronmotors angetrieben ist.**

(57) Die Erfindung bezieht sich auf ein kleines Haushaltsgerät, das mittels eines Einphasensynchronmotors (2) angetrieben ist, dessen Abtriebswelle (5) eine Last (9) antreibt, wobei die Arbeitsfunktion nicht abhängig ist von der Drehrichtung und wobei abhängig von der Drehrichtung ein unterschiedliches Betriebsgeräusch und Vibrationen auftreten. Im Übertragungssystem ist eine Rücklaufsperre vorgesehen, die den Rotor zwingt, in der günstigen Drehrichtung zu laufen. Insbesondere ist der Einphasensynchronmotor (2) mit seinem Übertragungsweg zur Last (9) so ausgebildet, daß das günstigere Betriebsgeräusch in der Drehrichtung auftritt, in welcher das vom Statorstrom auf den Rotor (3) ausgeübte Moment gleich Null wird, bevor das magnetische Klebemoment bei stromlosen Statorspulen (4d) gleich Null ist und zu einer stabilen Ruhelage führt. Der Rotor (3) wird mittels der Rücklaufsperre (4l) gezwungen, in der günstigen, vorzugsweise positiven Richtung zu drehen.

FIG.1

## Kleines Haushaltsgerät, das mittels eines Einphasensynchronmotors angetrieben ist

Die Erfindung bezieht sich auf ein kleines Haushaltsgerät, das mittels eines Einphasensynchronmotors angetrieben ist, dessen Abtriebswelle eine Last antreibt mit nicht von der Drehrichtung abhängiger Arbeitsfunktion, wobei abhängig von der Drehrichtung ein unterschiedliches Betriebsgeräusch und Vibrationen auftreten.

Es sind kleine Haushaltsgeräte bekannt, bei denen die Arbeitsfunktion nicht abhängig ist von der Drehrichtung des Motors. Dies gilt bei allen Geräten, bei denen die Arbeitsbewegung eine hin- und hergehende Bewegung ist, wie beispielsweise bei Elektro-Rasiergeräten mit einem hin und her - schwingenden Untermesser oder Haarschneidegeräten. Diese hin-und hergehenden Bewegungen des Scherwerkzeuges lassen sich mit Hilfe eines Schwingankermotors oder auch eines Elektromotors mit umlaufendem Anker, beispielsweise mit einem Einphasensynchronmotor, erzeugen. Ein solcher Antrieb für ein Haarschneidegerät ist beispielsweise in der Zeitschrift ETZ, Band 30, 1978, H2, Seiten 56 bis 60, beschrieben.

Es sind auch andere kleine Haushaltsgeräte bekannt, die eine umlaufende Arbeitsbewegung ausführen und bei denen wie beispielsweise bei Zitruspressen oder Messerschleifern, die Werkzeuge ihre Arbeitsfunktion unabhängig von der Drehrichtung leisten. Des weiteren ist es auch bekannt, derartige kleine Haushaltsgeräte mit umlaufendem Werkzeug von Einphasensynchronmotoren antreiben zu lassen.

Bei den mittels Einphasensynchronmotoren angetriebenen kleinen Haushaltsgeräten ist mehr oder weniger bemerkbar, daß das Betriebsgeräusch abhängig ist von der Drehrichtung des Motors. Zum Teil ist lediglich die Klangfarbe des Geräusches anders. Es gibt aber auch Fälle, in denen das Geräusch in der einen Drehrichtung wesentlich lauter und unangenehmer ist als in der anderen. Hierdurch kann der Benutzer verunsichert oder gestört werden, was ihn zu einer negativen Beurteilung oder sogar völligen Ablehnung des Gerätes verleitet.

Die unterschiedlichen Geräusche können von einem von der Drehrichtung abhängigen Bewegungsverhalten des Motors abhängig sein. Unsymmetrien sind dabei vor allem bei der Umwandlung von Drehbewegungen in Schwingbewegungen zu beobachten.

Es ist Aufgabe der Erfindung, bei von Einphasensynchronmotoren angetriebenen Geräten, bei denen die Arbeitsfunktion unabhängig von der Drehrichtung des Motors ist, ein angenehmes Geräusch zu erzielen, das auch bei wiederholtem Einschalten und Gebrauch des Gerätes stets den gleichen Eindruck vermittelt.

Die gestellte Aufgabe ist erfindungsgemäß dadurch gelöst, daß der Übertragungsweg eine Rücklaufsperre aufweist und daß der Rotor mittels dieser Rücklaufsperre gezwungen wird, in der Richtung zu drehen, in der das günstigere Betriebsgeräusch und/oder weniger Vibrationen auftreten.

Der Motor läuft damit immer in der für das Geräusch und die Vibrationen günstigen Drehrichtung an, und der Benutzer hat damit stets den gleichen Geräuscheindruck und die gleichen Gesamtwahrnehmungen des Betriebsverhaltens. Der Benutzer wird nicht mehr verunsichert hinsichtlich der Qualität des Gerätes.

Nach einer weiteren Ausgestaltung der Erfindung ist vorgesehen, daß der Einphasensynchronmotor mit seinem Übertragungsweg zur Last so ausgebildet ist, daß das günstigere Betriebsgeräusch in der Drehrichtung auftritt, in welcher das vom Statorstrom auf den Rotor ausgeübte Moment gleich Null wird, bevor das magnetische Klebemoment bei stromlosen Statorspulen gleich Null ist und zu einer stabilen Ruhelage führt, und daß der Rotor mittels einer Rücklaufsperre gezwungen wird, in dieser positiven Richtung zu drehen.

Durch die Bevorzugung der günstigen Drehrichtung und das Sperren der entgegengesetzten Drehrichtung läßt sich ein angenehmes Arbeitsgeräusch erzielen, das insbesondere angenehmer ist gegenüber den Vibrationen und Geräuschen, die ein Schwingankerantrieb erzeugt. Auch das Startgeräusch wird verbessert

An sich sind mechanische Rücklaufsperren z. B. aus der GB-PS 4l9 767 bekannt. Bei dieser Rücklaufsperre erfährt ein reibungsgekoppelter, am Gehäuse drehbar gelagerter Sperrhebel eine von der Drehrichtung des Motors abhängig radiale Auslenkung, die den Hebel gegen eine Blockiernase führt oder davon wegdrückt. Eine derartige Anordnung wäre an sich zum Blockieren der unerwünschten Drehrichtung einsetzbar. Das Startgeräusch ließe sich damit aber, wenn der Motor das Bestreben hat, in der unerwünschten Drehrichtung anzulaufen, wegen des direkten formschlüssigen Sperrens nicht verbessern.

Nach einer weiteren Ausgestaltung der Erfindung ist vorgesehen, daß bei einem Antrieb, bei dem zwischen der Abtriebswelle des Motors und der Last Übertragungsglieder vorgesehen sind, die Sperrwirkung der Rücklaufsperre auf eines dieser Übertragungsglieder ausgeübt wird. Der Sperreingriff der Rücklaufsperre wirkt sich in diesem Fall milder aus und verursacht weniger Geräusche.

Bei einer anderen Ausführungsform der Erfindung, bei der die Übertragungsglieder von einem Kurvenabtastgetriebe gebildet werden, das aus einem auf der Rotorwelle angebrachten Nocken und einem den Nocken abtastenden, drehbar gelagerten Abtastrad besteht, das federnd gegen den Nocken gedrückt ist, wird die Sperrwirkung auf dieses Abtastrad durch Sperren einer Drehrichtung dieses Abtastrades ausgeübt. Bei einer anderen Ausführungsform der Erfindung ist vorgesehen, daß die Sperrwirkung auf eines der Abtasträder ausgeübt wird. Das Abtastrad, auf das die Sperrwirkung ausgeübt wird, ist dabei zwar ein Glied in der Kette der Übertragungsglieder, überträgt aber durch Drehung keine Kräfte auf das Abtriebsteil; die Drehbarkeit sorgt nur für das leichte Abrollen des Nockens auf dem Kurvenabtaster bzw. Schwenkarm. Die Sperrwirkung der Rücklaufsperre wirkt damit seitlich des eigentlichen Kraftübertragungsweges und wirkt damit durch Reibungserhöhung und nicht direkt formschlüssig weich auf den Einphasensynchronmotor.

Nach einer weiteren Ausgestaltung der Erfindung ist vorgesehen, daß die Sperrwirkung erzeugt wird mittels eines federnden Sperrelementes, das gegen eine Stirnfläche des Abtastrades drückt, an dem eine Sperrnase vorgesehen ist, gegen die die Sperrklinke bei der unerwünschten Drehrichtung anschlägt, wobei die Sperrklinke ein Kunststoffspritzteil ist, das an dem gleichen Übertragungselement gelagert ist wie das Abtastrad.

Die Erfindung wird anhand des in der Zeichnung dargestellten Ausführungsbeispieles näher erläutert. Es zeigen:

Fig. I den Antriebsmechanismus eines Trockenrasierapparates, wobei der Mechanismus aus einem Einphasensynchronmotor, einem spiegelbildlichen Nocken und einem den spiegelbildlichen Nocken abtastenden Kurvenabtaster besteht,

Fig. 2 den den Nocken abtastenden Kurzvenabtaster mit einer auf das Abtastrad einwirkenden Rücklaufsperre in Draufsicht,

Fig. 3 die Anordnung nach Fig. 2 im Schnitt längs der Linie III-III,

Fig. 4 einen abgewandelten Antriebsmechanismus mit einem Nocken und zwei den Nocken abtastenden Abtastrollen,

Fig. 5 eine bei dem Mechanismus nach Fig. 4 eingesetzte Rücklaufsperre nach den Fig. 2 und 3.

Fig. I zeigt einen doppelarmigen Kurvenabtasterantrieb für ein Vibrationsgerät, beispielsweise einen Trockenrasier apparat, mit einer einen Nocken abtastenden Abtastrolle. An einer Montagewand I des Trockenrasierapparates ist ein Synchronmotor 2 mit seinem dauermagnetischen Rotor 3 gelagert. Der Rotor 3 ist drehbar im Luftspalt 4a zwischen Polschuhen 4b angeordnet. Auf das U-förmig geformte Statoreisen 4c mit den Polschuhen 4b sind die Erregerspulen 4d aufgeschoben. Eine Antriebswelle 5 des Synchronmotors steht senkrecht aus dem Rotor 3 hervor und weist nach oben aus der Zeichenebene heraus. Auf der Antriebswelle 5 ist ein spiegelbildlicher Nocken 7 angeordnet, der eine derartige Kontur 8 aufweist, daß ein Untermesser 9 des Trockenrasierapparates beim Drehen des Nockens 7 eine sinusförmige, vom Verdrehungswinkel des Nockens abhängige Auslenkung erfährt. Die längere Mittellinie des Nockens 7 ist mit l0 bezeichnet.

Gegen den Nocken 7 drückt ein Abtastrad I3, das in einem Rollenlager I4 eines doppelarmigen Kurvenabtasters I5 gelagert ist. Der doppelarmige Kurvenabtaster I5 weist zwei Hebelarme I6 und I7 auf, die um ein gemeinsames Schwenklager I8 im Knickpunkt zwischen beiden Hebelarmen I6 und I7 verschwenkbar sind. Die Hebelarme I6 und I7, die starr miteinander verbunden sind, schließen einen Winkel von ca. I40° ein, der sich bemißt zwischen der Verbindungslinie 36 zwischen dem Rollenlager I4 und dem Schwenklager I8 und einer Mittellinie 37 des Hebelarmes I7.

Gegen den Hebelarm I6 drückt eine Andruckfeder 2I, deren Vorspannung mit Hilfe einer Stellschraube 23 einstellbar ist. Die Mittellinie 24 der Andruckfeder 2I verläuft bei Mittenstellung des Abtasters I5 durch die Motorwelle 5 hindurch und steht senkrecht auf der Verbindungslinie 36 von Schwenklager I8 und Rollenlager I4.

Der Hebelarm I7 des doppelarmigen Abtasters I5 ist mit einem Mitnehmer 25 versehen, der von Greifern 27 des Untermessers 9 umfaßt wird. Das Untermesser 9 ist mit Hilfe von angedeuteten Lagern 3I in Richtung eines Doppelpfeiles 33 verschieblich. Das Abtastrad I3 wird über einen elastischen Ring 43 mit seiner Oberfläche 34 gegen die Oberfläche 8 des Nockens 7 gedrückt. Die Andruckkraft ist dabei so bemessen, daß einerseits das Abtastrad I3 zu keiner Zeit von dem Nocken 7 abheben kann, daß andererseits die Andruckkraft aber nicht so groß wird, daß die Umlaufbewegung des Rotors beeinträchtigt wird.

Eine solche Anordnung mit einem Einphasensynchronmotor und einem nachgeschalteten Lastübertragungsweg zeigt im allgemeinen, abhängig von der Drehrichtung des Motors, ein unterschiedliches Geräusch und Vibrationsverhalten. Diese sind zurückzuführen zum einen auf Unsymmetrien in der Auslegung der Statorpolbögen des Einphasensynchronmotors und zum anderen auf Unsymmeterien in bezug auf die Drehrichtung im mechanischen Übertragungsweg zwischen Motor und Last.

Wenn das günstige Geräuschverhalten des Einphasensynchronmotors und des ihm nachgeschalteten Lastübertragungsweges in positiver Drehrichtung des Rotors 3 auftritt, dann muß nur noch sichergestellt werden, daß der Motor auch tatsächlich immer in dieser positiven, für das Geräusch günstigen Drehrichtung läuft. Die positive Drehrichtung ist die, in welcher das vom Statorstrom auf den Rotor aus geübte Drehmoment gleich Null wird, bevor das magnetische Klebemoment bei stromlosen Statorspulen gleich Null ist und gleichzeitig zu einer stabilen Ruhelage führt. Das magnetische Klebemoment ist das Moment, welches der Rotormagnet bei stromlosen Statorspulen einer Verdrehung entgegensetzt. In der stabilen Ruhestellung, bei stromlosen Statorspulen steht der Rotor aufgrund der Magnetkraft des Rotormagneten nämlich in einer bestimmten Stellung gegenüber den Statorpolen 4b, die von der Hauptrichtung des Statorfeldes um einen positiven Winkel abweicht.

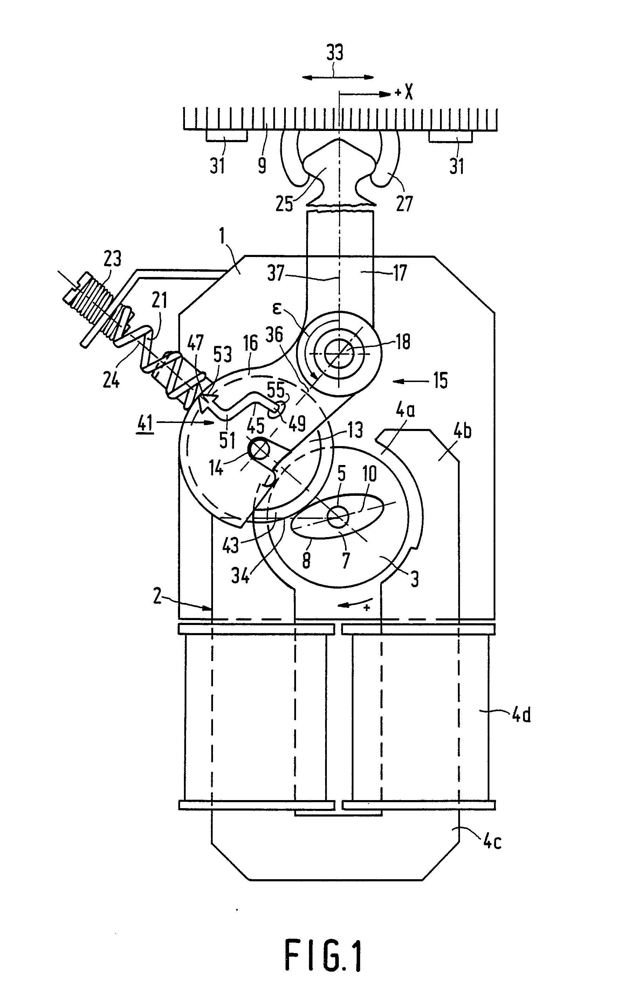

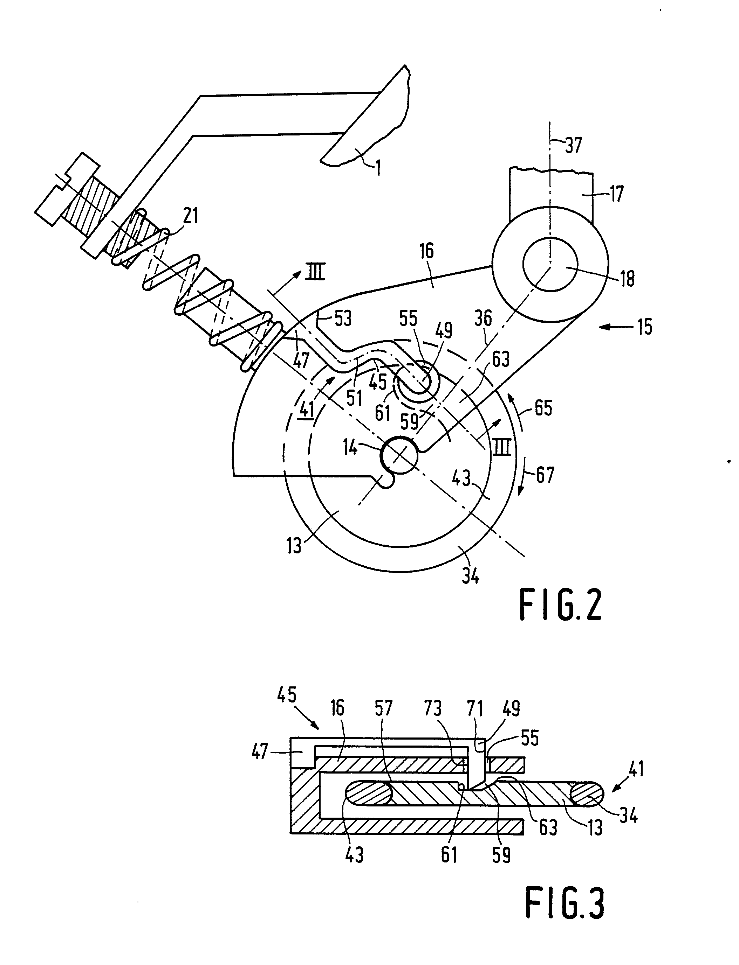

Zur Sicherstellung der günstigen Drehrichtung ist eine Rücklaufsperre 41 vorgesehen, die in Fig. I nur grob angedeutet ist und in der Fig. 2 in Draufsicht und in Fig. 3 im Schnitt längs einer Linie III-III dargestellt ist. Diese Rücklaufsperre 41 wirkt zwischen dem Hebelarm I6 des doppelarmigen Kurvenabtasters I5 und dem Abtastrad I3, welches an seiner Oberfläche mit einem Reibring 43, beispielsweise aus Gummi, versehen ist. Die Rücklaufsperre 41 besteht aus einem Sperrelement 45, das aufgebaut ist aus einem Befestigungszapfen 47, einem Sperrhaken 49 und einer den Befestigungszapfen 47 und den Sperrhaken 49 verbindenden federnden, Z-förmigen Brücke 51. Der Befestigungszapfen 47 ist unverlierbar in eine Schwalbenschwanzführung 53 des Hebelarmes I6 eingesetzt. Der Sperrhaken 49 greift freibeweglich durch ein weiteres Loch 55 in dem Hebelarm I6 hindurch. Die federnde Brücke 51 drückt den Sperrhaken 49 ständig gegen eine Stirnfläche 57 des Abtastrades I3 (Fig. 3).

Das Abtastrad I3 ist im Bereich seiner Stirnfläche 57 mit einer Vertiefung 59 versehen. Diese Vertiefung 59 weist in Umfangsrichtung zwei unterschiedlich ausgebildete Wände 61 und 63 auf. Die Wand 61 stellt für den Sperrhaken 49 eine Blockiernase dar und verläuft deshalb senkrecht zur Stirnfläche 57. Die andere Wand 63 stellt eine - schräge Ebene dar, über die der Sperrhaken 49 hinweg gleiten kann. In Abhängigkeit von der Drehrichtung des Motors wirkt nun diese Rücklaufsperre. Dreht der Rotor 3 über den Nocken 7 das Abtastrad I3 in Richtung eines Pfeiles 65, dann läuft der Sperrhaken 49 über die - schräge Wand 63 ständig aus der Vertiefung 59 heraus. Dreht der Nocken 7 das Abtastrad hingegen in Richtung des Pfeiles 67, dann stößt der Sperrhaken 49 gegen die Sperrnase 6I, wodurch das Abtastrad I3 wird blockiert. Wenn die Reibung zwischen der Oberfläche 34 des Reibringes 43 auf dem Abtastrad I3 und dem Nocken 7 groß genug ist, dann hält das Abtastrad I3 den Rotor 3 an. Das bedeutet, daß der Einphasensynchronmotor seine Drehrichtung umkehrt. Die elastische Ausbildung des Reibringes, die nur eine Übertragungshilfe, jedoch kein Übertragungsglied darstellt, hat auch zur Folge, daß Sperr-Impusspitzen abgebaut und das System mechanisch entlastet wird. Die Verformung der Oberfläche des Reibringes 43 führt zu einer quasi formschlüssigen Sperrung, die jedoch verzögert und sanft zunächst durch Reibung eingreift. Die Sperrwirkung der Sperrklinke 41 ist nun so gewählt, daß der Rotor 3 nur in der günstigen Drehrichtung, d. h. in der geräuschgünstigeren Drehrichtung anlaufen kann. Damit ist sichergestellt, daß der Motor und der Antrieb immer nur in der günstigen Drehrichtung betrieben werden, wobei diese Drehrichtung diejenige ist, in der die Geräuschentwicklung auf dem Lastübertragungsweg 7, I3, I6, I7, 27, 9 angenehm und am geringsten ist. Die Rückwand 71 des Sperrhakens 49 sollte sich an der Wand 73 des Loches 55 vorzugsweise elastisch abstützen können. Die Federkonstante und Masse der Sperrklinke 41 sollten im übrigen so angepaßt werden, daß beim Betrieb der Vorrichtung ein möglichst geringes Prellen erfolgt und der Sperrhaken im Lauf möglichst weich auf das Abtastrad I3 aufsetzt. Eine federnde, Z-förmige Brücke 51 in Form eines Kunststoffteiles ist dabei besonders geeignet. Die Anpreßkraft der Feder sollte auch danach bemessen sein, daß eine Stabilisierung der Motorbewegung erfolgt und auf zusätzliche Dämpfungsmittel des Motors verzichtet werden kann. Die gewünschte Anpreßkraft läßt sich dadurch verwirklichen, daß der Hebel elastisch ist und unter einer bestimmten Vorspannung steht.

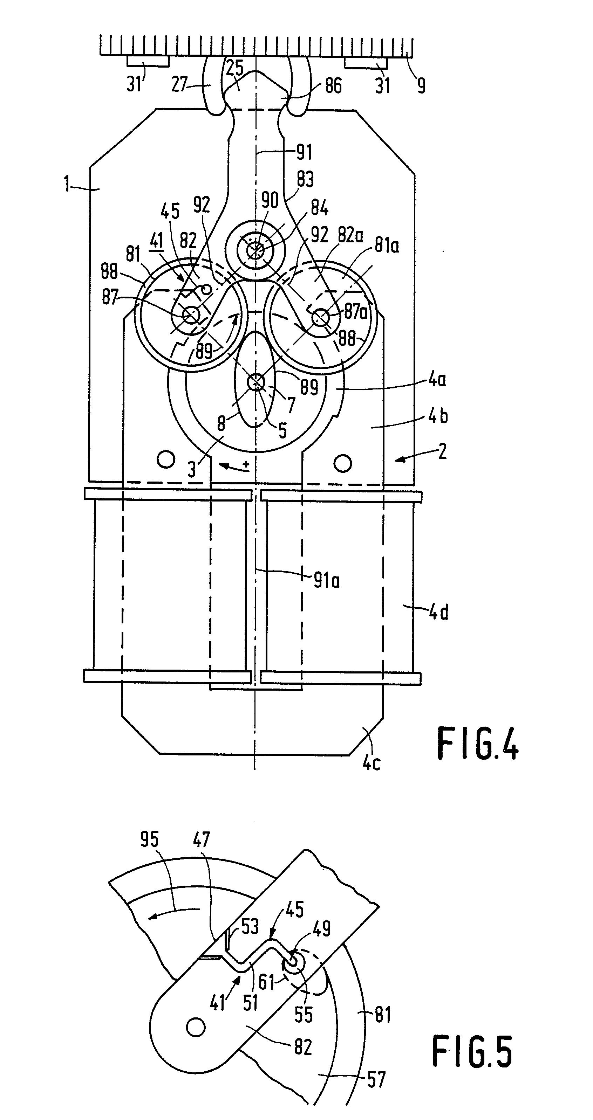

Bei der Ausführungsform nach Fig. 4 kann auf das Anpressen einer Rolle mittels einer Feder verzichtet werden. Der Einphasensynchronmotor 2 treibt mit seiner Rotorwelle 5 über den spiegelbildlichen Nocken 7 zwei Abtastrollen 8I, 8Ia an die an den freien Enden von Teilarmen 82, 82a eines Schwenkarms 83 gelagert sind. Der Schwenkarm 83 ist seinerseits um eine Achse 84 am Rahmen I schwenkbar gelagert. Die Abtastrollen 8I und 8Ia tasten die Kontur 8 des Nockens 7 durch ständiges Anliegen ab. Am abtriebsseitigen Ende 86 des Schwenkarmes 83 greifen die Gabelarme 27 des Messerblockes 9 an. Auf nicht näher dargestellte Weise können beide Teilarme 82 und 82a oder nur einer von beiden elastisch ausgebildet sein. Es ist auch möglich, die Lagerungen im Bereich der Rollenachse 87 und 87a elastisch auszubilden oder die Mantelfläche einer oder beider Rollen 8I, 8Ia mit einem elastischen Belag 88 zu versehen, um so einen gewissen Ausgleich zur Vermeidung von Verklemmungen herbeizuführen.

Bei der Ausführungsform nach Fig. 4 schließen die Verbindungslinien 89 zwischen der Motor/Nockenachse 5 und den Rollenachsen 87, 87a in der gezeichneten Mittenstellung einen Winkel 0 miteinander ein, der 90° beträgt. Da die Bewegung, die den Rollen 8I, 8Ia vom Nocken 7 aufgezwungen wird, ursprünglich ausgehend von der Mittenstellung der Rollen 8I, 8Ia, von einer linear oszillierenden Bewegung in Richtung der Verbindungslinien 89 von Nocken-und Rollenachse ausgeht, ist vorzugsweise der Mittelpunkt 90 der Schwenkachse 84 des Schwenkarmes 83 der Mittelpunkt eines Kreises, der die beiden Rollenachsen 87,87a bei der Mittenstellung der Rollen 8I, 8Ia in etwa tangiert. Diese Kreisbahn sollte sich möglichst eng an die ursprünglich linear oszillierende Rollenbahn anschmiegen. Hierzu ist es vorteilhaft, wenn die Schwenkarmachse 84 bzw. die Mittellinie 9Ia des Motorblechpaketes die Winkelhalbierende zwischen den Verbindungslinien 89 von Rollenachse 87, 87a und Nockenachse 5 bildet, wobei diese Mittellinie 9Ia durch die Nockenachse 5 verläuft. Bei Mittenstand des Schwenkarmes 83 sollen die Verbindungslinien 92 zwischen Schwenkarmachse 84 und Rollenachsen 87, 87a und die Verbindungslinien 89 zwischen Nockenachse 5 und den Rollenachsen 87, 87a vorzugsweise senkrecht aufeinander stehen. Abweichungen von der linearen Bahn führen zu Verzerrungen. Es ist möglich, diese bei der Festlegung der Nockenkontur zu berücksichtigen und aufzufangen. Eine andere Möglichkeit, zu einer gleichzeitigen gleichmäßigen Anlage der Rollen an dem Nocken zu kommen, besteht darin, daß die Abweichungen von der idealen linearen Bahn in postiver und negativer Richtung gleich groß sind. Toleranzen und Restlärm lassen sich durch im Ganzen oder an der Oberfläche elastische Rollen bekämpfen. Von Vorteil ist es dabei, wenn einer oder beide Antriebsteilarme 82, 82a derart elastisch sind, daß sie mit leichtem Druck für eine geringe Anpreßkraft an dem Nocken 7 sorgen.

Der Übertragungsweg des Gerätes ist mit einer Rücklaufsperre 4I versehen, die der nach Fig. 2 und 3 entspricht. Diese Rücklaufsperre 4I ist in Fig. 4 im Teilarm 82 angedeutet.

Fig. 5 zeigt die Rücklaufsperre 4I deutlicher. Die Rücklaufsperre 4I wirkt zwischen dem Teilarm 82 und dem Abtastrad 8I; sie besteht auf einem aus Kunststoff gespritzten Sperrelement 45, das aus einem Befestigungszapfen 47, einem Sperrhaken 49 und einer diese Teile verbindenden federnden, Z-förmigen Brücke 5I besteht. Der Befestigungszapfen 47 ist unverlierbar in eine Schwalbenschwanzführung 53 des Teilarmes 82 eingesetzt. Der Sperrhaken 49 greift frei beweglich durch ein Loch 55 in dem Teilarm 82 hindurch. Die federnde Brücke 5I drückt den Sperrhaken 49 ständig gegen die Stirnfläche 57 des Abtastrades 8I.

Das Abtastrad ist an der Stirnfläche 57 mit einer Vertiefung 59 versehen, die in der Solldrehrichtung in einer schrägen Ebene 63 frei auf der Stirnfläche 57 ausläuft und entgegen der Drehrichtung eine Blockiernase 6I aufweist.

Dreht der Nocken 7 das Abtastrad 8I in der gewünschten Solldrehrichtung (Pfeil 95), dann wirkt die Rücklaufsperre 4I nicht. Dreht der Nocken 7 das Abtastrad 8I aber entgegen der Solldrehrichtung (95), dann läuft der Sperrhaken 49 auf die Blockiernase 6I und wird angehalten. Die Motordrehrichtung wird damit umgekehrt.

**Ansprüche**

I. Kleines Haushaltsgerät, das mittels eines Einphasensynchronmotors (2) angetrieben ist, dessen Abtriebswelle (5) eine Last (9) antreibt mit nicht von der Drehrichtung abhängiger Arbeitsfunktion, wobei abhängig von der Drehrichtung ein unterschiedliches Betriebsgeräusch und Vibrationen auftreten, dadurch gekennzeichnet, daß der Übertragungsweg eine Rücklaufsperre aufweist und daß der Rotor mittels dieser Rücklaufsperre gezwungen wird, in der Richtung zu drehen, in der das günstigere Betriebsgeräusch und/oder weniger Vibrationen auftreten.

2. Haushaltsgerät nach Anspruch I, dadurch gekennzeichnet, daß der Einphasensynchronmotor (2) mit seinem Übertragungsweg zur Last so ausgebildet ist, daß das günstigere Betriebsgeräusch in der Drehrichtung auftritt, in welcher das vom Statorstrom auf den Rotor (3) ausgeübte Moment gleich Null wird, bevor das magnetische Klebemoment bei stromlosen Statorspulen (4d) gleich Null ist und zu einer stabilen Ruhelage führt, und daß der Rotor (3) mittels einer Rücklaufsperre (4I) gezwungen wird, in dieser positiven Richtung zu drehen.

3. Haushaltsgerät nach Anspruch 2, bei dem zwischen der Abtriebswelle (5) des Motors (2) und der Last (9) Übertragungsglieder (7, 13, 15) vorgesehen sind, dadurch gekennzeichnet, daß die Sperrwirkung der Rücklaufsperre (41) auf eines dieser Übertragungsglieder ausgeübt wird.

4. Haushaltsgerät nach den Ansprüchen 1 bis 3, wobei die Übertragungsglieder von einem Kurvenabtastgetriebe (7, 13, 15) gebildet werden, das aus einem auf der Rotorwelle (5) angebrachten Nocken (7) und einem den Nocken (7) abtastenden, drehbar gelagerten Abtastrad (13) besteht, das federnd gegen den Nocken (7) gedrückt ist, dadurch gekennzeichnet, daß die Sperrwirkung auf dieses Abtastrad (13) ausgeübt wird und dadurch der Einphasensynchronmotor (2) mittelbar gesperrt wird.

5. Haushaltsgerät nach den Ansprüchen 1 bis 3, wobei die Übertragungsglieder von einem Kurvenabtastgetriebe (7, 81, 81a, 83) gebildet werden, das aus einem auf die Rotorwelle (5) angebrachten Nocken (7) und den Nocken (7) abtastenden, drehbar gelagerten Abtasträdern (81, 81a) besteht, dadurch gekennzeichnet, daß die Sperrwirkung auf eines der Abtasträder (81, 81a) ausgeübt wird.

6. Haushaltsgerät nach den Ansprüchen 4 oder 5, dadurch gekennzeichnet, daß die Sperrwirkung erzeugt wird mittels eines federnden Sperrelementes (45), das gegen eine Stirnfläche (57) des Abtastrades (13, 81, 81a) drückt, an dem eine Sperrnase (61) vorgesehen ist, in die das Sperrelement (45) bei der unerwünschten Drehrichtung einfällt.

7. Haushaltsgerät nach Anspruch 6, dadurch gekennzeichnet, daß das Sperrelement (45) ein Z-förmiges Kunststoffspritzteil ist, das an dem gleichen Übertragungselement (16 bzw. 82) gelagert ist wie das Abtastrad (13 bzw. 81, 81a).

8. Haushaltsgerät nach Anspruch 6, dadurch gekennzeichnet, daß das Sperrelement (45) mit einer Kunststoffblattfeder (51) versehen ist, die einen Sperrhaken (49) gegen die Stirnfläche (57) des Abtastrades (13, 81, 81a) drückt.

**FIG.1**

# FIG.2

# FIG.3

0 240 068

FIG.4

FIG.5